# FASCICULE DE BREVET EUROPEEN

(11) **EP 3 763 984 B1**
(45) Date de publication et mention de la délivrance du brevet: **16.02.2022**
(21) Numéro de dépôt: 20184595.5
(22) Date de dépôt: 07.07.2020
(51) Int. Cl.: F16L 37/096, B60L 50/64, B60L 58/26, F16L 37/127, H01M 10/613, H01M 10/625

(54) **DISPOSITIF DE RACCORDEMENT FLUIDIQUE**
FLÜSSIGKEITSANSCHLUSSVORRICHTUNG
FLUID CONNECTION DEVICE

(30) Priorité: 12.07.2019 FR 1907854
(43) Date de publication de la demande: 13.01.2021
(73) Titulaire: HUTCHINSON, 75008 Paris (FR)
(72) Inventeur: ULLY, Stéphane, 45120 CHALETTE SUR LOING (FR); MONGENDRE, Julien, 45380 LA CHAPELLE SAINT MESMIN (FR)
(74) Mandataire: Gevers & Orès

(56) Documents cités:
- EP-A1- 0 568 075
- WO-A2-2012/002678
- DE-U1-202007 004 452
- GB-A- 2 244 774

## Description

### Domaine technique de l'invention

La présente invention concerne un dispositif de raccordement fluidique, en particulier pour un véhicule automobile, ce dispositif pouvant être utilisé dans un circuit de refroidissement d'un organe tel qu'une batterie, un calculateur ou un moteur thermique à combustion interne par exemple.

### Arrière-plan technique

L'arrière-plan technique comprend notamment les documents GB-A-2 244 774, DE-U1-20 2007 004452, WO-A2-2012/002678 et EP-A1-0 568 075.

Un raccordement fluidique pour un circuit de fluide doit être fiable et en particulier étanche et pérenne. Il est par ailleurs important de s'assurer que le raccordement est correctement réalisé et de pouvoir le verrouiller pour éviter une déconnexion involontaire.

De nos jours, il existe une multitude de dispositifs de raccordement assurant d'informer ou d'assurer la bonne connexion entre deux embouts, respectivement mâle et femelle. Cependant, ces dispositifs sont en général très encombrants et comprennent plusieurs pièces pour assurer ces fonctions. Ils sont par ailleurs complexes et coûteux à réaliser.

La présente invention propose un perfectionnement à cette technologie, qui est simple, efficace et économique.

### Résumé de l'invention

L'invention concerne un dispositif de raccordement fluidique, en particulier pour un circuit de fluide d'un véhicule automobile, comportant :
- un premier embout tubulaire comportant une partie mâle configurée pour être engagée dans une partie femelle d'un second embout par translation axiale le long d'un axe,
- au moins deux pattes élastiquement déformables et diamétralement opposées par rapport audit axe, ces pattes s'étendant à l'extérieur du premier embout, sensiblement parallèlement audit axe, et comportant des premières extrémités axiales comportant des organes de retenue configurés pour coopérer avec ladite partie femelle afin de la verrouiller axialement vis-à-vis de la partie mâle, et des secondes extrémités axiales opposées comportant des organes de manipulation en vue de la déformation élastique des pattes et le déverrouillage des parties mâle et femelle,
caractérisé en ce qu'il comprend en outre un verrou monté sur le corps et mobile en translation sur ce corps dans un plan sensiblement perpendiculaire audit axe, depuis une première position de libération des pattes autorisant leur déformation élastique, jusqu'à une seconde position de blocage des pattes interdisant leur déformation élastique.

Le dispositif comprend donc pour l'essentiel deux pièces, et est donc simple et peu coûteux à réaliser. Il comprend un corps comportant un embout mâle et des pattes de retenue de l'embout mâle vis-à-vis d'un embout femelle dans laquelle il est destiné à être engagé. Le dispositif comprend en outre un verrou configuré pour coopérer avec les pattes afin d'autoriser ou d'empêcher leur déformation élastique. Le verrou est avantageusement déplacé manuellement entre ses positions par un opérateur qui peut s'assurer du verrouillage et de la bonne connexion du raccordement, soit visuellement soit par l'intermédiaire d'un équipement approprié de contrôle tel qu'une caméra par exemple.

Le dispositif selon l'invention peut comprendre une ou plusieurs des caractéristiques suivantes, prises isolément les unes des autres ou en combinaison les unes avec les autres :
- le verrou a une forme générale en U et est monté à cheval sur ledit premier embout ;
- le verrou comprend une première paire de jambes s'étendant de part et d'autre du premier embout et configurées pour s'étendre entre le premier embout et lesdites secondes extrémités ;
- les jambes sont conformées pour autoriser une déformation élastique des pattes lorsque le verrou est dans la première position, et pour bloquer une déformation élastique des pattes lorsque le verrou est dans la seconde position ;
- les jambes comprennent des évidements conformées pour recevoir les secondes extrémités des pattes lorsque le verrou est dans la première position, et des butées conformées pour coopérer par appui avec les secondes extrémités des pattes lorsque le verrou est dans la seconde position ;
- les jambes comprennent des dents en saillie configurés pour coopérer par encliquetage élastique avec des éléments du premier embout, lorsque le verrou est déplacé entre la première et la seconde position ;
- les jambes comprennent à leurs extrémités libres des parties de préhension ;
- les dents en saillie s'étendent d'un côté des jambes, et les parties de préhension sont formées par des rebords s'étendant d'un côté opposé des jambes.
- le verrou comprend une seconde paire de jambes s'étendant de part et d'autre du premier embout et configurées pour s'étendre entre le premier embout et lesdites secondes extrémités ;
- les jambes de la seconde paire sont conformées pour coopérer avec le premier embout afin de garantir un maintien du verrou sur le premier embout ;
- les jambes de la seconde paire comprennent des crochets de maintien configurés pour coopérer avec des éléments du premier embout ;
- les jambes de la seconde paire sont séparées des jambes de la première paire par des murets en saillie du premier embout ;
-- les jambes de la première paire et/ou de la seconde paire sont élastiquement déformables en particulier en flexion ;
- les murets sont diamétralement opposés par rapport audit axe et s'étendent dans un même plan perpendiculaire à cet axe et passant par lesdites secondes extrémités ;
-- le verrou comprend au moins une fenêtre d'engagement d'une portion en saillie du premier embout, lors du déplacement du verrou de sa première à sa seconde position ;
- le verrou comprend au moins une ouverture à travers laquelle il est possible de visualiser le premier embout lorsque le verrou est dans la seconde position, et il n'est pas possible de visualiser le premier embout lorsque le verrou est dans la première position ;
-- le dispositif a une forme générale en L ou coudée, sa partie mâle s'étendant le long d'un axe X et le dispositif comportant une autre partie de raccordement le long d'un axe Y sensiblement perpendiculaire à l'axe X,
-- le dispositif a une dimension axiale le long de l'axe X qui est inférieure à la dimension axiale du dispositif le long de l'axe Y ; dans le cas où l'axe X serait vertical en position d'utilisation, cela permet de limiter l'encombrement vertical du dispositif.

L'invention concerne également un circuit de refroidissement pour un véhicule, en particulier automobile, comportant au moins un dispositif tel que décrit ci-dessus.

La présente invention concerne encore un pack batterie pour un véhicule automobile, comportant un boîtier contenant des batteries et un circuit de refroidissement tel que décrit ci-dessus, le boîtier comportant un couvercle rapporté et configuré pour recouvrir ou prendre appui sur le dispositif. Avantageusement, le dispositif comprend une face d'appui dudit couvercle ou de recouvrement par ledit couvercle, cette face s'étendant dans un plan sensiblement perpendiculaire audit axe X.

L'invention concerne encore un véhicule, en particulier automobile, comportant un circuit de fluide équipé d'au moins un dispositif tel que décrit ci-dessus.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig. 1] la figure 1 est une vue schématique en perspective d'un dispositif de raccordement fluidique selon l'invention ;
[Fig. 2-4] les figures 2 à 4 sont des vues schématiques à plus grande échelle d'un corps du dispositif de la figure 1 ;
[Fig. 5-7] les figures 5 à 7 sont des vues schématiques à plus grande échelle d'un verrou du dispositif de la figure 1 ;
[Fig. 8] la figure 8 est une vue schématique en perspective du dispositif de la figure 1, le verrou étant dans une première position de déverrouillage ;
[Fig. 9-10] les figures 9 et 10 sont des vues schématiques en perspective du dispositif de la figure 1, le verrou étant dans une seconde position de verrouillage ;
[Fig. 11-12] les figures 11 et 12 sont des vues schématiques en coupe du dispositif de la figure 1, respectivement selon deux plans parallèles, le verrou étant dans la première position de déverrouillage ; et
[Fig. 13-14] les figures 13 et 14 sont des vues très schématiques d'un dispositif selon l'invention dans un environnement d'utilisation, le verrou étant dans la seconde position de verrouillage à la figure 13 et dans la première position de déverrouillage à la figure 14.

### Description détaillée de l'invention

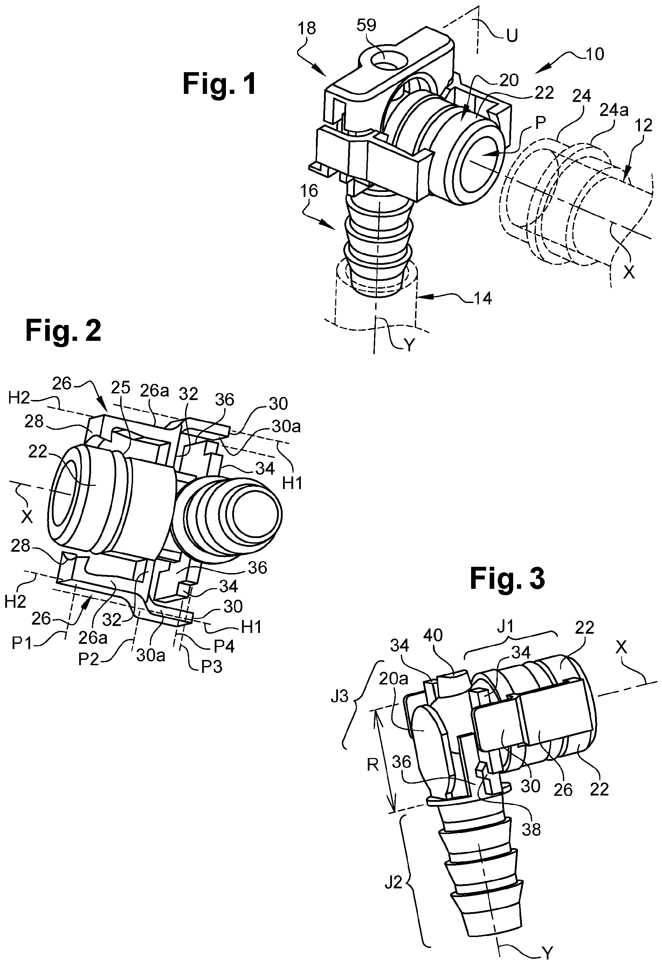

Les figures 1 à 12 illustrent un mode de réalisation d'un dispositif 10 selon l'invention de raccordement fluidique, par exemple pour un circuit de refroidissement d'un moteur thermique à combustion interne de véhicule automobile.

Le dispositif 10 peut être utilisé pour raccorder deux tuyaux 12, 14, schématiquement représentés par des traits pointillés à la figure 1.

Le dispositif 10 comprend pour l'essentiel deux pièces à savoir un corps 16 et un verrou 18. Il pourrait comprendre d'autres pièces telles que des joints par exemple.

Le corps 16 est représenté seul aux figures 2 à 4.

Le corps 16 est formé d'une seule pièce et comprend un embout 20 définissant un passage interne P de circulation d'un fluide, par exemple depuis le tuyau 12 vers le tuyau 14.

Dans l'exemple représenté, l'embout 20 est coudé en L mais il pourrait être droit en variante.

L'embout 20 comprend ainsi deux parties J1, J2 ou branches tubulaires sensiblement droites et perpendiculaires entre elles. Ces parties J1, J2 sont reliées entre elles par une jonction J3 (cf. figure 3).

La jonction J3 comprend une face arrière 20a qui est opposée à l'ouverture du passage P de l'embout 20 et qui s'étend dans un plan perpendiculaire à l'axe X. De préférence, la distance axiale (mesurée le long de l'axe X) entre cette ouverture (ou l'extrémité libre de l'embout 20) et la face 20a est inférieure ou égale à 30mm, voire 25mm. Cette face 20a est de préférence alignée avec la périphérie externe de la partie J2.

La partie J2 de l'embout 20 est ici configurée pour être fixée au tuyau 14, par exemple par engagement en force. L'engagement se fait ici en translation axiale le long de l'axe Y de cette partie. Cette partie J2 peut comprendre un profil en sapin comportant des nervures annulaires d'ancrage dans le matériau du tuyau 14.

L'autre partie J1 de l'embout 20 est une partie mâle 22 et est configurée pour être engagée dans une partie femelle 24 d'un second embout porté par le tuyau 12. L'engagement se fait ici en translation axiale le long de l'axe X de cette partie 22 et la connexion est du type à encliquetage élastique.

La partie femelle 24 comprend avantageusement une nervure annulaire externe 24a pour réaliser cet encliquetage.

La partie mâle 22 a une forme générale cylindrique et comprend une gorge annulaire externe de logement d'un joint 25 dans l'exemple représenté.

Le corps 16 ou l'embout 20 comprend également deux pattes 26 élastiquement déformables.

Les pattes 26 sont diamétralement opposées par rapport à l'axe X et s'étendent à l'extérieur de l'embout 20 et en particulier de la partie mâle 22, sensiblement parallèlement à l'axe X (figure 2). Elles comportent des premières extrémités axiales comportant des organes de retenue 28, tels que des crochets, configurés pour coopérer avec la partie femelle 24, et en particulier sa nervure 24a, afin de verrouiller axialement les parties 22, 24 et donc les embouts mâle et femelle.

Les pattes 26 comportent en outre des secondes extrémités axiales opposées comportant des organes de manipulation 30, tels que des ailes 30a, en vue de la déformation élastique des pattes 26 et le déverrouillage des parties mâle et femelle.

Chaque patte 26 comprend ici une paroi 26a sensiblement plane dont une extrémité axiale porte le rebord formant l'organe de retenue 28, qui s'étend radialement vers l'axe X. Cette paroi 26a est reliée à son extrémité opposée à l'aile 30a formant l'organe de manipulation 30.

La paroi 26a de chaque patte 26 s'étend le long et à distance de la partie mâle 22 et est reliée à cette partie mâle par un voile de liaison 32 s'étendant radialement entre la paroi 26a et la partie mâle 22. L'aile 30a s'étend, parallèlement à l'axe X, du côté opposé au rebord 28, et recouvre une partie de l'embout 20 et en particulier sa jonction J3.

La figure 2 permet de constater que les ailes 30a s'étendant dans des plans H1 parallèles entre eux et à l'axe X. Ces plans H1 sont parallèles aux plans H2 passant par les parois 26a des pattes 26, et écartés de ces plans H2.

Dans l'exemple représenté, les organes 28 sont situés dans un plan P1 perpendiculaire à l'axe X et situé au voisinage de l'extrémité libre de la partie mâle 22. Les voiles de liaison 32 sont situés dans un plan P2 perpendiculaire à l'axe X et situé au niveau de l'extrémité opposée de la partie mâle 22. Le joint 25 est ici situé entre les plans P1 et P2.

Les extrémités libres des ailes 30a, opposées aux organes 28, sont situées dans un plan P3 perpendiculaire à l'axe X.

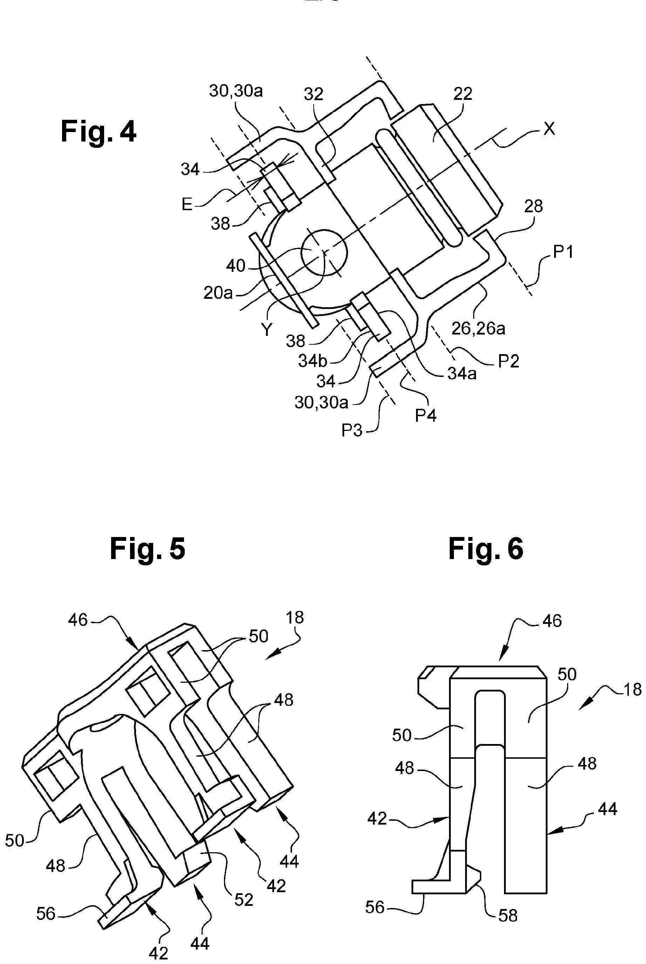

Le corps 16 comprend en outre deux murets 34 diamétralement opposés par rapport à l'axe X ainsi que par rapport à l'axe Y. Ces murets 34 sont en saillie sur la jonction J3 et s'étendent dans un plan P4 perpendiculaire à l'axe X et passant sensiblement par l'axe Y (figure 4).

Les murets 34 ont une épaisseur notée E, mesurée le long de l'axe X, et une hauteur notée R, mesurée le long de l'axe Y (figures 3 et 4). Les ailes 30a s'étendent au-dessus et à distance des murets 34 et ont une dimension axiale, mesurée le long de l'axe X, supérieure à E. Une partie de chaque aile 30a s'étend au-dessus et en avant du muret 34 correspondant, et une partie s'étend au-dessus et en arrière de ce muret. Les ailes 30a ont des dimensions le long de l'axe Y qui sont inférieures aux hauteurs R.

Chaque muret 34 comprend une première face 34a située du côté de la partie mâle 22 et une seconde face 34b située du côté opposé (figure 4). Chacune des faces 34a, 34b est avantageusement reliée à une surface de guidage 36 située sur la jonction J3 et s'étendant sensiblement parallèlement aux axes X et Y (figures 2 et 3).

Les faces 34b comprennent par ailleurs des dents en saillie 38. Chacune des faces 34b comprend une dent 38 qui est ici située au voisinage d'une extrémité du muret 34 située du côté de la jonction J2 (figures 3 et 4). Enfin, sur la jonction J3, le corps 16 comprend un plot cylindrique 40 centré sur l'axe Y (figures 3 et 4).

Comme évoqué dans ce qui précède, le corps 16 est réalisé d'une seule pièce en matériau plastique tel qu'en polyamide. Le joint 25 est un joint torique dans l'exemple représenté, par exemple en élastomère.

Le verrou 18 est formé d'une seule pièce, par exemple en matière plastique injectée. Il est représenté seul aux figures 5 à 7.

Le verrou 18 est monté sur le corps 16 et est mobile en translation dans un plan U sensiblement perpendiculaire à l'axe X, qui passe par exemple par l'axe Y (figure 1).

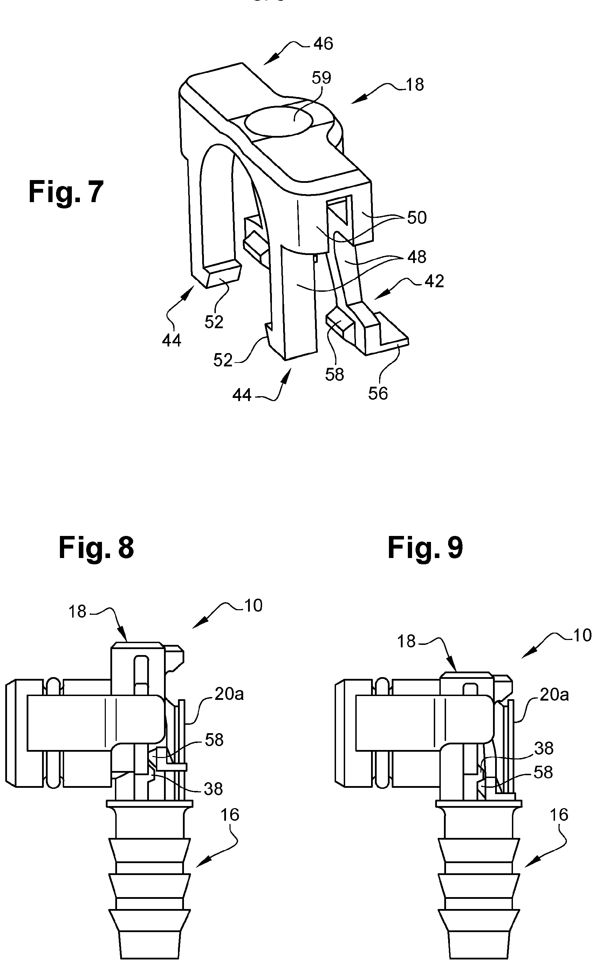

Le verrou 18 est mobile depuis une première position de libération des pattes 26 représentée aux figures 1 et 8, jusqu'à une seconde position de blocage des pattes représentée à la figure 9.

Lorsque le verrou 18 est dans la position de libération des pattes 26, ces pattes peuvent être déformées élastiquement de manière libre. Le dispositif 10 est alors dans un état déverrouillé. Lorsque le verrou 18 est dans la position de libération des pattes 26, ces pattes ne peuvent pas être déformées élastiquement. Le dispositif 10 est alors dans un état verrouillé. Dans l'exemple représenté, le verrou 18 a une forme générale en U et est monté à cheval sur l'embout. Le verrou 18 forme ainsi un cavalier.

Le verrou 18 comprend au moins une paire de jambes 42 et de préférence deux paires de jambes 42, 44 reliées entre elles par un pont 46.

Les jambes 42, 44 de chaque paire sont ici configurées pour s'étendre de part et d'autre de l'embout 20 et sont configurées pour s'étendre entre l'embout et les ailes 30a, et plus particulièrement entre la jonction J3 et ces ailes.

Les jambes 42, 44 sont conformées pour autoriser une déformation élastique des pattes 26 lorsque le verrou 18 est dans la première position, en laissant un espace libre disponible aux pattes en vue de leur déformation (figures 1 et 8). Les jambes 42, 44 sont en outre conformées pour bloquer une déformation élastique des pattes 26 lorsque le verrou 18 est dans la seconde position, en occupant les espaces précitées et en coopérant par butée avec les pattes.

Pour cela, les jambes 42, 44 comprennent des évidements 48 conformés pour recevoir les ailes 30a des pattes 26 lorsque le verrou 18 est dans la première position, et des butées 50 conformées pour coopérer par appui avec ces ailes lorsque le verrou 18 est dans la seconde position.

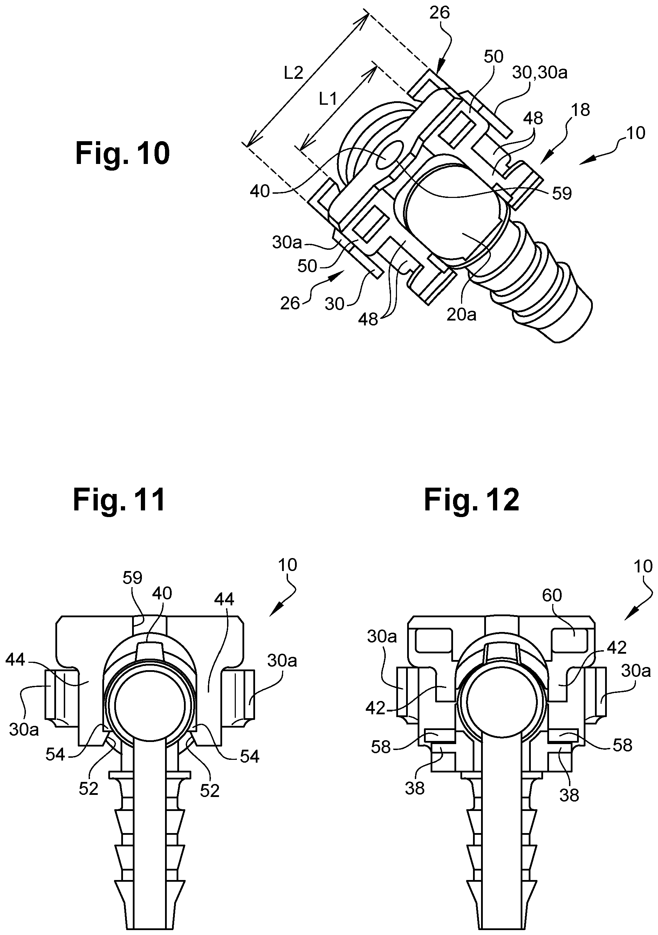

La figure 1 notamment permet en effet de voir que les évidements 48 des jambes 42, 44 sont situés en regard des ailes 30a des pattes 26 dans la première position. L'espace entre les jambes 42, 44 et les ailes 30a est suffisant pour déformer élastiquement les pattes 26. La figure 10 permet de voir que les butées 50 des jambes 42, 44 sont en regard des ailes 30a des pattes dans la seconde position. Les ailes 30a peuvent prendre appui sur ces butées 50 si un opérateur tente de déformer les pattes, cette déformation n'étant ici pas possible.

Les jambes 44 comprennent des crochets de retenue 52 en saillie configurés pour coopérer par butée avec des éléments, tels que des appuis 54, de l'embout 20, pour rendre imperdable le verrou 18, c'est-à-dire pour éviter une désolidarisation accidentelle du verrou 18 vis-à-vis du corps 16 (figure 11). Chacune des jambes 42, 44 a une forme générale rectiligne. Les jambes 42, 44 de chaque paire sont écartées d'une distance permettant son montage sur le corps 16 et en particulier sur la jonction J3. Les jambes 42, 44 situées d'un côté du verrou 18 sont en outre écartées l'une de l'autre d'une distance légèrement supérieure à l'épaisseur E précitée pour pouvoir être insérées et glissées de chaque côté du muret 34 correspondant.

Au niveau des évidements 48, les jambes définissent une largeur L1. Au niveau des butées 50, les jambes définissent une largeur L2 supérieure à L1 et légèrement inférieure à la distance entre les ailes 30a. Les largeurs L1, L2 sont mesurées ici dans une direction perpendiculaire aux axes X et Y.

Les jambes 42 situées du côté de la partie mâle 22 sont destinées à être insérées entre les ailes 30a et la jonction J3, d'un côté des murets 34. Ces jambes 42 sont avantageusement élastiquement déformables. Les autres jambes 44 sont destinées à être insérées entre les ailes 30a et la jonction J3, de l'autre côté des murets 34.

Les jambes 44 sont donc séparées des jambes 42 par les murets 34.

Les jambes 42 comprennent à leurs extrémités libres opposées au pont 46 des parties de préhension 56 qui peuvent être manipulées librement par un opérateur, comme cela sera décrit dans ce qui suit.

Les jambes 42 comprennent en outre des dents en saillie 58 configurés pour coopérer par encliquetage élastique avec les dents 38 de l'embout 20, lorsque le verrou 18 est déplacé entre les positions précitées. Les dents 58 s'étendent d'un côté des jambes 42, ici du côté des autres jambes 44, et les pattes de préhension 56 sont formées par des rebords s'étendant du côté opposé.

Le pont 46 du verrou 18 comprend une fenêtre 59 d'engagement du pion cylindrique 40. La fenêtre 59 a ici une forme complémentaire au pion 40 et peut coopérer par glissement avec le pion 40 pour faciliter le guidage du verrou 18 lors de ces déplacements entre les positions précitées.

Le pont 46 du verrou 18 comprend en outre au moins une ouverture 60 à travers laquelle il est possible de visualiser l'embout 20 lorsque le verrou 18 est dans la seconde position, et il n'est pas possible de visualiser le premier embout lorsque le verrou est dans la première position (cf. figure12).

Dans l'exemple représenté, le pont 46 comprend deux ouvertures 60 de ce type, qui sont situées sur une face du pont 46 située du côté opposé à la partie mâle 22.

Le dispositif 10 selon l'invention peut être utilisé de la façon suivante. Le corps 16 est tout d'abord raccordé par sa partie J2 à un tuyau 14 (figures 1 et 3). Le verrou 18 est dans la position de déverrouillage représentée aux figures 1 et 8. Il est maintenu dans cette position et rendu imperdable par la coopération et l'appui des crochets 52 sur les appuis 54 visibles à la figure 11. La partie mâle 22 de l'embout 20 est engagée dans la partie femelle 24 portée par le tuyau 12, par translation axiale le long de l'axe X, jusqu'à ce que la nervure 24a coopère par appui avec les organes 28 et soit retenue axialement par ces organes. Le passage de la nervure 24a entre les organes 28 peut être réalisé en force par un opérateur ou bien en facilitant ce passage par appui sur les ailes 30a des pattes 26. L'appui sur ces ailes 30a consiste à exercer une force sur ces ailes en direction de l'axe X, ce qui provoque un éloignement des organes 28 vis-à-vis de l'axe X et donc un écartement des organes 28 vis-à-vis de l'embout 20. Les parties mâle et femelle sont alors correctement raccordées et le verrou 18 peut être déplacé dans sa position de verrouillage. Pour cela, une force est exercée par l'opérateur sur le pont dans le plan U, pour déplacer le verrou 1 jusqu'à la position représentée à la figure 12. Les jambes 42, 44 glissent alors sur les surfaces 36 jusqu'à ce que les dents 58 coopèrent par encliquetage élastique avec les dents 38. Le glissement et l'encliquetage des dents 58 sur les dents 38 provoquent un point dur et une déformation élastique des jambes 42. Par ailleurs, le retour élastique des dents 56 sous les dents 38 peut engendrer un son informant l'opérateur du verrouillage du dispositif. Dans cette position où le verrou est abaissé ou enfoncé, les crochets 52 sont écartés des appuis 54 (figure 11) et l'embout 20 est visible à travers les ouvertures 60, afin que l'opérateur ait également un repère visuel du verrouillage et du bon raccordement du dispositif. L'opérateur peut déverrouiller le dispositif 10 en déplaçant le verrou 18 de sa position verrouillée à sa position déverrouillée. Pour cela, l'opérateur saisit les pattes de préhension 56 et exercent sur ces pattes une force dirigée vers le pont 46 du verrou, dans le plan U. Le dispositif 10 peut subir plusieurs opérations de verrouillage et déverrouillage successives, sans risque de détérioration.

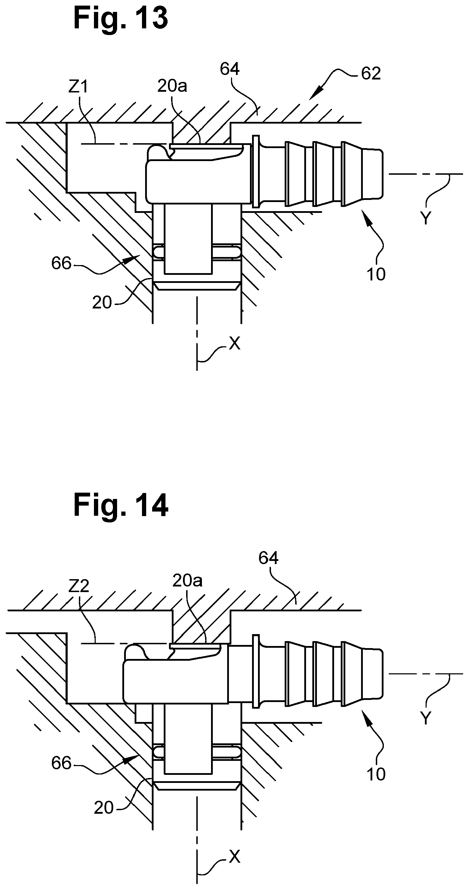

Les figures 13 et 14 illustrent un exemple non limitatif d'utilisation d'un dispositif 10 selon l'invention à l'intérieur d'un pack batterie 62 pour un véhicule automobile. Un pack batterie 62 comprend plusieurs batteries logées dans un boîtier fermé par un couvercle 64. Le pack batterie 62 est équipé d'un circuit de refroidissement 66 qui peut être raccordé à une source de fluide de refroidissement par le dispositif 10.

En position de montage représenté dans les dessins, l'axe X est vertical et donc l'axe Y est horizontal. Le couvercle 64 est un couvercle supérieur qui est rapporté et fixé sur le boîtier du pack batterie. On peut constater que le couvercle s'étend au-dessus du dispositif 10 et prend avantageusement appui sur la face arrière 20a du dispositif.

Dans la figure 13, l'embout 20 est correctement raccordé avec le circuit 66 qui est équipé d'un embout 12 tel que représenté à la figure 2. Le verrou 18 est en position de verrouillage et la face arrière 20a du dispositif est située dans un plan horizontal Z1 qui ne gêne pas la fixation du couvercle 64. Dans la figure 14, l'embout 20 n'est pas correctement raccordé avec le circuit 66 et le verrou 18 reste en position de déverrouillage. Le dispositif 10 n'est pas correctement installé et la face arrière 20a du dispositif est située dans un plan horizontal Z2 au-dessus de Z1 et qui gêne la fixation du couvercle 64. Même si le couvercle 64 peut prendre appui sur la face arrière 20a, il ne peut pas être correctement fixé sur le boîtier du pack batterie 62. L'invention a ainsi une fonction additionnelle de détrompage assurant un opérateur du bon raccordement du dispositif 10 et du circuit de refroidissement 66.

## Revendications

1. Dispositif (10) de raccordement fluidique, en particulier pour un circuit de fluide d'un véhicule automobile, comportant un corps (16) formé d'une seule pièce et comportant :
- un premier embout tubulaire (20) comportant une partie mâle (22) configurée pour être engagée dans une partie femelle (24) d'un second embout par translation axiale le long d'un axe (X),
- au moins deux pattes (26) élastiquement déformables et diamétralement opposées par rapport audit axe, ces pattes s'étendant à l'extérieur du premier embout, sensiblement parallèlement audit axe, et comportant des premières extrémités axiales comportant des organes de retenue (28) configurés pour coopérer avec ladite partie femelle afin de la verrouiller axialement vis-à-vis de la partie mâle, et des secondes extrémités axiales opposées comportant des organes de manipulation (30) en vue de la déformation élastique des pattes et le déverrouillage des parties mâle et femelle,
**caractérisé en ce qu'**il comprend en outre un verrou (18) monté sur le corps et mobile en translation sur ce corps dans un plan (U) sensiblement perpendiculaire audit axe, depuis une première position de libération des pattes autorisant leur déformation élastique, jusqu'à une seconde position de blocage des pattes interdisant leur déformation élastique.

2. Dispositif (10) selon la revendication 1, dans lequel le verrou (18) a une forme générale en U et est monté à cheval sur ledit premier embout (20).

3. Dispositif (10) selon la revendication 1 ou 2, dans lequel le verrou (18) comprend une première paire de jambes (42) s'étendant de part et d'autre du premier embout (20) et configurées pour s'étendre entre le premier embout et lesdites secondes extrémités.

4. Dispositif (10) selon la revendication 3, dans lequel les jambes (42) sont conformées pour autoriser une déformation élastique des pattes (26) lorsque le verrou (18) est dans la première position, et pour bloquer une déformation élastique des pattes lorsque le verrou est dans la seconde position.

5. Dispositif (10) selon la revendication 4, dans lequel les jambes (42) comprennent des évidements (48) conformées pour recevoir les secondes extrémités des pattes (26) lorsque le verrou (18) est dans la première position, et des butées (50) conformées pour coopérer par appui avec les secondes extrémités des pattes lorsque le verrou est dans la seconde position.

6. Dispositif (10) selon l'une des revendications 3 à 5, dans lequel les jambes (42) comprennent des dents en saillie (58) configurés pour coopérer par encliquetage élastique avec des éléments (38) du premier embout (20), lorsque le verrou (18) est déplacé entre la première et la seconde position.

7. Dispositif (10) selon l'une des revendications 3 à 6, dans lequel les jambes (42) comprennent à leurs extrémités libres des parties de préhension (56).

8. Dispositif (10) selon l'une des revendications 3 à 7, dans lequel le verrou (18) comprend une seconde paire de jambes (44) s'étendant de part et d'autre du premier embout (20) et configurées pour s'étendre entre le premier embout et lesdites secondes extrémités.

9. Dispositif (10) selon la revendication 8, dans lequel les jambes (44) de la seconde paire sont conformées pour coopérer avec le premier embout (20) afin de garantir un maintien du verrou (18) sur le premier embout.

10. Dispositif (10) selon l'une des revendications 8 et 9, dans lequel les jambes (44) de la seconde paire sont séparées des jambes (42) de la première paire par des murets (34) en saillie du premier embout (20).

11. Dispositif (10) selon l'une des revendications précédentes, dans lequel le verrou (18) comprend au moins une ouverture (60) à travers laquelle il est possible de visualiser le premier embout (20) lorsque le verrou est dans la seconde position, et il n'est pas possible de visualiser le premier embout lorsque le verrou est dans la première position.

12. Circuit de refroidissement pour un véhicule, en particulier automobile, comportant au moins un dispositif (10) selon l'une des revendications précédentes.

13. Pack batterie (62) pour un véhicule automobile, comportant un boîtier contenant des batteries et un circuit de refroidissement (66) selon la revendication précédente, le boîtier comportant un couvercle (64) rapporté et configuré pour recouvrir ou prendre appui sur le dispositif (10).

14. Pack batterie (62) selon la revendication précédente, dans lequel le dispositif (10) comprend une face (20a) d'appui dudit couvercle ou de recouvrement par ledit couvercle (64), cette face s'étendant dans un plan sensiblement perpendiculaire audit axe (X).

15. Véhicule, en particulier automobile, comportant un circuit de fluide équipé d'au moins un dispositif (10) selon l'une des revendications 1 à 11.

## Patentansprüche

1. Fluidanschlussvorrichtung (10), insbesondere für einen Fluidkreislauf eines Kraftfahrzeugs, der einen Körper (16), der aus einem einzigen Stück gebildet ist, umfasst, und die umfasst:
- einen ersten rohrförmigen Ansatz (20), der ein Steckteil (22) umfasst, das dazu ausgelegt ist, in ein Buchsenteil (24) eines zweiten Ansatzes durch axiale Verschiebung entlang einer Achse (X) eingefügt zu sein,
- mindestens zwei elastisch verformbare und diametral zu der Achse entgegengesetzte Pratzen (26), wobei sich diese Pratzen außerhalb des ersten Ansatzes im Wesentlichen parallel zu der Achse erstrecken und erste axiale Enden umfassen, die Halteorgane (28) umfassen, die dazu ausgelegt sind, mit dem Buchsenteil zusammenzuwirken, um gegenüber dem Steckteil axial zu verriegeln, und zweite axial entgegengesetzte Enden, die Handhabungsorgane (30) zum elastischen Verformen der Pratzen und Entriegeln des Steck- und des Buchsenteils umfassen,
**dadurch gekennzeichnet, dass** sie außerdem einen Riegel (18) umfasst, der auf den Körper montiert und in Verschiebung auf diesem Körper in einer Ebene (U) im Wesentlichen senkrecht zu der Achse von einer ersten Freigabeposition der Pratzen, die ihre elastische Verformung gestattet, bis zu einer zweiten Blockierungsposition der Pratzen, die ihre elastische Verformung untersagt, beweglich ist.

2. Vorrichtung (10) nach Anspruch 1, wobei der Riegel (18) eine allgemeine U-Form aufweist und auf dem ersten Ansatz (20) sitzend montiert ist.

3. Vorrichtung (10) nach Anspruch 1 oder 2, wobei der Riegel (18) ein erstes Paar von Schenkeln (42) umfasst, die sich zu beiden Seiten des ersten Ansatzes (20) erstrecken und dazu ausgelegt sind, sich zwischen dem ersten Ansatz und den zweiten Enden zu erstrecken.

4. Vorrichtung (10) nach Anspruch 3, wobei die Schenkel (42) ausgestaltet sind, um eine elastische Verformung der Pratzen (26) zu gestatten, wenn der Riegel (18) in der ersten Position ist, und um eine elastische Verformung der Pratzen zu blockieren, wenn der Riegel in der zweiten Position ist.

5. Vorrichtung (10) nach Anspruch 4, wobei die Schenkel (42) Aussparungen (48) umfassen, die ausgestaltet sind, um die zweiten Enden der Pratzen (26) aufzunehmen, wenn der Riegel (18) in der ersten Position ist, und Anschläge (50), die ausgestaltet sind, um durch Auflage mit den zweiten Enden der Pratzen zusammenzuwirken, wenn der Riegel in der zweiten Position ist.

6. Vorrichtung (10) nach einem der Ansprüche 3 bis 5, wobei die Schenkel (42) vorragende Zähne (58) umfassen, die dazu ausgelegt sind, durch elastisches Einrasten mit Elementen (38) des ersten Ansatzes (20) zusammenzuwirken, wenn der Riegel (18) von der ersten zu der zweiten Position bewegt wird.

7. Vorrichtung (10) nach einem der Ansprüche 3 bis 6, wobei die Schenkel (42) an ihren freien Enden Greifteile (56) umfassen.

8. Vorrichtung (10) nach einem der Ansprüche 3 bis 7, wobei der Riegel (18) ein zweites Paar von Schenkeln (44) umfasst, die sich zu beiden Seiten des ersten Ansatzes (20) erstrecken und dazu ausgelegt sind, sich zwischen dem ersten Ansatz und den zweiten Enden zu erstrecken.

9. Vorrichtung (10) nach Anspruch 8, wobei die Schenkel (44) des zweiten Paars ausgestaltet sind, um mit dem ersten Ansatz (20) zusammenzuwirken, um ein Halten des Riegels (18) auf dem ersten Ansatz zu garantieren.

10. Vorrichtung (10) nach einem der Ansprüche 8 und 9, wobei die Schenkel (44) des zweiten Paares von den Schenkeln (42) des ersten Paares durch Mäuerchen (34), die auf dem ersten Ansatz (20) vorragen, getrennt sind.

11. Vorrichtung (10) nach einem der vorstehenden Ansprüche, wobei der Riegel (18) mindestens eine Öffnung (60) umfasst, durch die es möglich ist, den ersten Ansatz (20) zu visualisieren, wenn der Riegel in der zweiten Position ist, und es nicht möglich ist, den ersten Ansatz zu visualisieren, wenn der Riegel in der ersten Position ist.

12. Kühlkreislauf für ein Fahrzeug, insbesondere ein Kraftfahrzeug, der mindestens eine Vorrichtung (10) nach einem der vorstehenden Ansprüche umfasst.

13. Akkusatz (62) für ein Kraftfahrzeug, der ein Gehäuse umfasst, das Akkus, und einen Kühlkreislauf (66) nach dem vorstehenden Anspruch enthält, wobei das Gehäuse einen Deckel (64) umfasst, der angebaut und ausgelegt ist, um die Vorrichtung (10) abzudecken oder auf ihr aufzuliegen.

14. Akkusatz (62) nach dem vorstehenden Anspruch, wobei die Vorrichtung (10) eine Auflagefläche (20a) des Deckels oder zum Abdecken durch den Deckel (64) umfasst, wobei sich diese Fläche in einer Ebene im Wesentlichen senkrecht zu der Achse (X) erstreckt.

15. Fahrzeug, insbesondere Kraftfahrzeug, das einen Fluidkreislauf, der mit mindestens einer Vorrichtung (10) nach einem der Ansprüche 1 bis 11 ausgestattet ist, umfasst.

## Claims

1. Fluid connection device (10), in particular for a fluid circuit of a motor vehicle, comprising a body (16) formed of one single part and comprising:
- a first tubular nozzle (20) comprising a male part (22) configured to be engaged in a female part (24) of a second nozzle by an axial translation movement along an axis (X),
- at least two elastically-deformable tabs (26) that are diametrically opposed with respect to said axis, these tabs extending outwards from the first nozzle, substantially parallel with said axis, and comprising first axial ends comprising retaining members (28) configured to engage with said female part in order to lock it axially with respect to the male part, and second opposite axial ends comprising handling members (30) provided for the purpose of elastically deforming the tabs and unlocking the male and female parts,
**characterised in that** it further comprises a lock (18) mounted on the body and mobile in translation on said body in a plane (U) substantially perpendicular to said axis, from a first position wherein the tabs are released, allowing their elastic deformation, to a second position wherein the tabs are blocked, preventing their elastic deformation.

2. Device (10) according to claim 1, wherein the lock (18) is generally U-shaped and is mounted to straddle said first nozzle (20).

3. Device (10) according to claim 1 or 2, wherein the lock (18) comprises a first pair of legs (42) extending on either side of the first nozzle (20) and configured to extend from the first nozzle to said second ends.

4. Device (10) according to claim 3, wherein the legs (42) are adapted to allow an elastic deformation of the tabs (26) when the lock (18) is in the first position, and to block an elastic deformation of the tabs when the lock is in the second position.

5. Device (10) according to claim 4, wherein the legs (42) comprise cavities (48) adapted to receive the second ends of the tabs (26) when the lock (18) is in the first position, and abutments (50) adapted to engage by bearing with the second ends of the tabs when the lock is in the second position.

6. Device (10) according one of claims 3 to 5, wherein the legs (42) comprise protruding teeth (58) configured to engage by elastic snap-fitting with elements (38) of the first nozzle (20), when the lock (18) is moved between the first and the second position.

7. Device (10) according to one of claims 3 to 6, wherein the legs (42) comprise gripping parts (56) at their free ends.

8. Device (10) according to one of claims 3 to 7, wherein the lock (18) comprises a second pair of legs (44) extending on either side of the first nozzle (20) and configured to extend from the first nozzle to said second ends.

9. Device (10) according to claim 8, wherein the legs (44) of the second pair are adapted to engage with the first nozzle (20) in order to ensure the lock (18) is maintained on the first nozzle.

10. Device (10) according to one of claims 8 and 9, wherein the legs (44) of the second pair are separated from the legs (42) of the first pair by small walls (34) protruding from the first nozzle (20).

11. Device (10) according to one of the preceding claims, wherein the lock (18) comprises at least one opening (60) through which it is possible to see the first nozzle (20) when the lock is in the second position, the first nozzle being impossible to see when the lock is in the first position.

12. Cooling circuit for a vehicle, in particular a motor vehicle, comprising at least one device (10) according to one of the preceding claims.

13. Battery pack (62) for a motor vehicle comprising a box containing batteries and a cooling circuit (66) according to the preceding claim, box comprising a removable cover (64) configured to cover or rest on the device (10).

14. Battery pack (62) according to the preceding claim, wherein the device (10) comprises a bearing surface (20a) of said cover or a surface covered by said cover (64), said surface extending in a plane substantially perpendicular to said axis (X).

15. Vehicle, in particular a motor vehicle, comprising a fluid circuit equipped with at least one device (10) according to one of claims 1 to 11.
